# EUROPEAN PATENT SPECIFICATION

(11) **EP 3 517 837 B1**
(45) Date of publication and mention of the grant of the patent: **27.07.2022**
(21) Application number: 19153539.2
(22) Date of filing: 24.01.2019
(51) Int. Cl.: F21V 7/00, F21V 7/09, F21Y 115/10, F21Y 103/10, F21V 11/02

(54) **LIGHTING ASSEMBLY**
BELEUCHTUNGSANORDNUNG
ENSEMBLE D'ÉCLAIRAGE

(30) Priority: 30.01.2018 FI 20185079
(43) Date of publication of application: 31.07.2019
(73) Proprietor: Teknoware Oy, 15200 Lahti (FI)
(72) Inventor: Holopainen, Aki, 15200 Lahti (FI)
(74) Representative: Papula Oy

(56) References cited:
- JP-A- 2006 196 405
- JP-A- 2015 018 627
- US-A1- 2004 114 366
- US-A1- 2007 183 053
- US-A1- 2014 226 328
- US-A1- 2014 293 594
- US-B2- 7 008 079

## Description

### Background of the invention

The invention relates to a lighting assembly which comprises a lighting system installed in a housing and configured to produce light and emit the light out from the housing, and a reflector system configured for reflecting the light produced by the lighting system out from the housing.

It is known to produce a narrow light beam with a lighting assembly by using a suitable lens element. The known lens elements configured for producing a narrow light beam are relatively expensive.

Document US 7,008,079 B2 discloses a composite reflecting surface for a linear LED array, with truncated circular parabolic reflectors and elongated troughs defined by longitudinal convex ribs.

Document US 2014/0226328 A1 discloses a lamp with a plurality of LEDs arranged longitudinally, and an elongated reflector. The solid angle areas of all LEDs after reflection overlap at least partially at an illumination surface distance from an underside of the lamp of at least 0.2 to 2.5 times the distance between the LEDs.

Document JP2006 196405 A discloses an elongated luminaire with a reflector composed of strip-like curved members that are attached to each other at their long edges.

### Short description of the invention

The object of the invention is to provide a lighting assembly producing a narrow light beam without the known type of lens element. The object of the invention is achieved by means of a lighting assembly characterized by what is put forth in the independent claim. The preferred embodiments of the invention are presented in the dependent claims.

The invention is based on the idea of providing the lighting assembly with a reflector having two concave surfaces, each having a different radius of curvature and being configured for producing a narrow light beam. The lighting assembly is configured to be such that most of the light emitted by the light source out from the housing passes via the reflector provided with the concave surfaces.

The advantage of the lighting assembly according to the invention is its simplicity and low manufacturing costs.

### Short description of the figures

The invention will now be described in detail in the context of preferred embodiments, with reference to the accompanying drawings in which:
Fig. 1 shows a lighting assembly according to one embodiment of the invention;
Fig. 2 shows a cross-section of the lighting assembly of Fig. 1; and
Fig. 3 illustrates the geometry of the lighting system and the reflector system in the lighting assembly of Fig. 1.

### DETAILED DESCRIPTION OF THE INVENTION

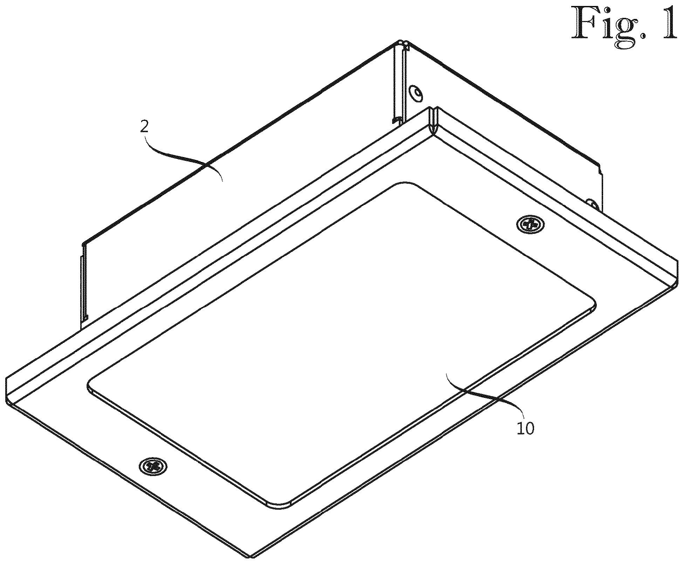

Fig. 1 shows a lighting assembly which comprises a housing 2, a lighting system, a reflector system, a fin system, and a protection element 10. The housing 2 has a longitudinal direction, a lateral direction and a height direction which are perpendicular to each other. The longitudinal dimension of the housing 2 is greater than its lateral or height dimension.

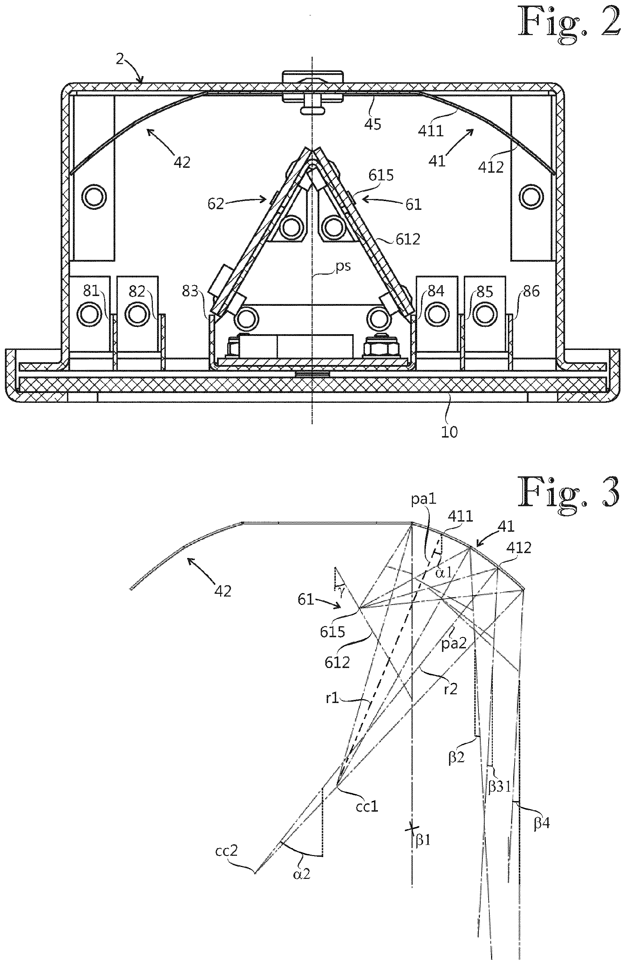

Fig. 2 shows a cross-section of the lighting assembly of Fig. 1. In Fig. 2 the longitudinal direction is perpendicular to the image plane. The geometrical features of the lighting assembly, such as various angles, are indicated in Fig. 3 only.

The lighting system is installed in the housing 2 and configured to produce light and emit the light out from the housing 2. The lighting system comprises a first light source 61 and a second light source 62.

The reflector system is configured for reflecting the light produced by the lighting system out from the housing 2 with a desired shape of light beam, without a separate lens element. The reflector system comprises a first reflector 41 and a second reflector 42 which are separated by a black and matt-surfaced antireflection surface 45.

The lighting assembly is configured to be such that substantially all of the light emitted by the lighting system out from the housing 2 passes via the reflector system. In this context, substantially all refers to a proportion of 95% or greater. In one alternative embodiment the lighting assembly is configured to be such that most of the light emitted by the lighting system out from the housing passes via the reflector system.

The fin system is configured to reduce lateral reflection of the light output from the lighting assembly. The fin system comprises six longitudinally extending fins denoted by 81 - 86. Each of the fins 81 - 86 is substantially an opaque and weakly reflective element located on the path of the ray of light output from the lighting system after the reflector system. Fins 81 - 83 are configured to reduce the lateral reflection of the light output from the second light source 62, and fins 84 - 86 are configured to reduce the lateral reflection of the light output from the first light source 61. The fins 81 - 86 are dark-painted aluminium elements.

In alternative embodiments the number of fins in the fin system is 4 - 8. The number of fins depends on the width of the lighting fixture, such that a fin system of a wide lighting fixture comprises more fins than that of a narrow lighting fixture.

The protection element 10 is translucent material and configured to protect the lighting system and the reflector system. The protection element 10 comprises a flat plate arranged perpendicular to the height direction. In one alternative embodiment the protection element is manufactured by co-extrusion, and the fin system is integrated with the protection element, such that the protection element is manufactured from translucent material and the fins are manufactured from opaque and weakly reflective material.

As seen in Fig. 2, the lighting assembly is symmetrical relative to a plane of symmetry ps. The longitudinal and height directions are parallel to the plane of symmetry ps, and the lateral direction is perpendicular to the plane of symmetry. The second light source 62 is geometrically a mirror image of the first light source 61 relative to the plane of symmetry ps. The second reflector 42 is geometrically a mirror image of the first reflector 41 relative to the plane of symmetry ps. In one alternative embodiment the lighting assembly only comprises the elements on the right side of the plane of symmetry ps of Fig. 2, i.e. the lighting assembly only comprises the first light source and the first reflector.

The first reflector 41 includes a first reflector surface 411 and a second reflector surface 412. The first reflector surface 411 is a concave surface with a first radius of curvature r1. The first radius of curvature r1 is substantially larger than the distance of the first light source 61 from the first reflector surface 411. Accordingly, the first radius of curvature r1 is also substantially larger than the distance of the centre of the first light source 61 from any point of the first reflector surface 411 as viewed in a plane perpendicular to the longitudinal direction.

The second reflector surface 412 is a concave surface with a second radius of curvature r2 which is larger than the first radius of curvature r1. A centre of curvature cc2 of the second reflector surface 412 is spaced from a centre of curvature cc1 of the first reflector surface 411. The second radius of curvature r2 is substantially larger than the distance of the first light source 61 from the second reflector surface 412.

The first radius of curvature r1 of the first reflector surface 411 is over 300% larger than the circumferential dimension of the first reflector surface 411, i.e. the distance from a first edge of the first reflector surface 411 to its second edge along the reflector surface. The second radius of curvature r2 of the second reflector surface 412 is over 400% larger than the circumferential dimension of the second reflector surface 412. The circumferential dimension of the second reflector surface 412 is larger than the circumferential dimension of the first reflector surface 411. In one alternative embodiment the first radius of curvature of the first reflector surface is over 100% larger than the circumferential dimension of the first reflector surface, and the second radius of curvature of the second reflector surface is over 150% larger than the circumferential dimension of the second reflector surface.

The first reflector surface 411 and the second reflector surface 412 are adjacent reflector surfaces. As viewed in the lateral direction, the first reflector surface 411 and the second reflector surface 412 are located on the same side of the first light source 61. The second reflector surface 412 is located in the lateral direction further away from the first light source 61 than the first reflector surface 411. The reflector comprising the first reflector 41 and the second reflector 42 in the reflector system is a solid element which is manufactured from one blank sheet material by bending. In an alternative embodiment the first reflector 41 is a solid element which is manufactured from one blank sheet material by bending.

A principal axis pa1 of the first reflector surface 411 is angled at a first principal axis angle α1 relative to the height direction, and a principal axis pa2 of the second reflector surface 412 is angled at a second principal axis angle α2 relative to the height direction. Both of the principal axis pa1 of the first reflector surface 411 and the principal axis pa2 of the second reflector surface 412 are inclined towards the first light source 61 with respect to the height direction. The first principal axis angle α1 is approximately 25°, and the second principal axis angle α2 is approximately 40°. In one alternative embodiment the first principal axis angle is 15° - 35°, and the second principal axis angle is 30° - 50°, such that the second principal axis angle is at least 10° larger than the first principal axis angle.

The first reflector surface 411 and the second reflector surface 412 of the first reflector 41 are located, with respect to the first light source 61, such that a ray of light output from the centre of the first light source 61 is reflected from a first edge of the first reflector surface 411 at a first reflection angle β1 relative to the height direction, from a second edge of the first reflector surface 411 at a second reflection angle β2 relative to the height direction, from the middle point between a first edge and a second edge of the second reflector surface 412 at a third reflection angle β31 relative to the height direction, and from the second edge of the second reflector surface 412 at a fourth reflection angle β4 relative to the height direction. The entire surface configured for reflecting light in the first reflector 41 is located between the first edge of the first reflector surface 411 and the second edge of the second reflector surface 412.

The first edge of each of the reflector surfaces 411 and 412 is located, in the lateral direction, closer to the first light source 61 than the second edge. The first edge and the second edge of each of the reflector surfaces 411 and 412 extend parallel to the longitudinal direction.

The first reflection angle β1 is approximately 0°, the second reflection angle β2 is directed approximately 3° outward, the third reflection angle β31 and the fourth reflection angle β4 are directed approximately 3° inward, the outward angle being directed away from the first light source 61, and the inward angle being directed toward the first light source 61.

The second edge of the first reflector surface 411 substantially coincides with the first edge of the second reflector surface 412, i.e. they are spaced by less than 3mm. The small distance between the second edge of the first reflector surface 411 and the first edge of the second reflector surface 412 ensures that the smallest possible amount of light output from the first light source 61 falling on the boundary between the first reflector surface 411 and the second reflector surface 412 is absorbed or reflected in a wrong direction.

The small values of the reflection angles β1, β2, β31 and β4 produce a narrow light beam for the lighting assembly. In one alternative embodiment each of the first reflection angle, the second reflection angle, the third reflection angle and the fourth reflection angle is smaller than a threshold angle of reflection which is 0° - 10°. In another alternative embodiment each of the first reflection angle, the second reflection angle, the third reflection angle and the fourth reflection angle is smaller than a threshold angle of reflection which is 0° - 25°.

The first reflector 41 of the lighting assembly shown in Fig. 2 comprises exactly two concave reflector surfaces, i.e. the first reflector surface 411 and the second reflector surface 412. In alternative embodiments the first reflector may comprise three or more concave reflector surfaces.

The lighting system comprises a circuit board 612, and the first light source 61 comprises several LEDs 615 installed on the circuit board 612. The several LEDs 615 are installed in a row parallel to the longitudinal direction. The several LEDs 615 are white LEDs. In one alternative embodiment the first light source comprises coloured LEDs. In another alternative embodiment the first light source comprises both white and coloured LEDs.

The circuit board 612 defines a plane which is angled at a circuit board angle y relative to the height direction. The circuit board angle y is approximately 30°. The principal axis pa1 of the first reflector surface and the principal axis pa2 of the second reflector surface pass through the circuit board 612. The rays of light output from the centre of the first light source 61, which are reflected from the first edge of the first reflector surface 411, the second edge of the first reflector surface 411, the first edge of the second reflector surface 412, and the second edge of the second reflector surface 412, each bypass the circuit board 612 without touching it. In one alternative embodiment the circuit board angle is 20° - 45°, and the principal axis of the first reflector surface passes through the circuit board.

It is obvious for a person skilled in the art that the basic idea of the invention may be implemented in many different ways. The invention and its embodiments are thus not limited to the above-described examples but may vary within the scope of the claims.

## Claims

1. A lighting assembly, comprising:
a housing (2) having a longitudinal direction, a lateral direction and a height direction which are perpendicular to each other;
a lighting system which is installed in the housing (2) and configured to produce light and emit the light out from the housing (2), the lighting system comprising a first light source (61);
a reflector system which is configured for reflecting the light produced by the lighting system out from the housing (2) and comprises a first reflector (41) including
a first reflector surface (411) which is a concave surface with a first radius of curvature (r1), and
- a second reflector surface (412) which is a concave surface with a second radius of curvature (r2) which is larger than the first radius of curvature (r1), a centre of curvature (cc2) of the second reflector surface (412) being spaced from a centre of curvature (cc1) of the first reflector surface (411);
which lighting assembly is configured to be such that most of the light emitted by the lighting system out from the housing (2) passes via the reflector system; and in which lighting assembly the first reflector surface (411) and the second reflector surface (412) are adjacent reflector surfaces, of which the second reflector surface (412) is located in the lateral direction further away from the first light source (61) than the first reflector surface (411),
**characterized in that** the first reflector surface (411) and the second reflector surface (412) of the first reflector (41) are located, with respect to the first light source (61), such that a ray of light output from the centre of the first light source (61) is reflected from a first edge of the first reflector surface (411) at a first reflection angle (β1) relative to the height direction, from a second edge of the first reflector surface (411) at a second reflection angle (β2) relative to the height direction, from the middle point between a first edge and a second edge of the second reflector surface (412) at a third reflection angle (β31) relative to the height direction, and from the second edge of the second reflector surface (412) at a fourth reflection angle (β4) relative to the height direction, whereby each of the first reflection angle (β1), the second reflection angle (β2), the third reflection angle (β31) and the fourth reflection angle (β4) is smaller than a threshold angle of reflection which is 0° - 10°.

2. The lighting assembly according to claim 1, **characterized in that** a principal axis (pa1) of the first reflector surface (411) is angled at a first principal axis angle (α1) relative to the height direction, and a principal axis (pa2) of the second reflector surface (412) is angled at a second principal axis angle (α2) relative to the height direction, both of the principal axis (pa1) of the first reflector surface (411) and the principle axis (pa2) of the second reflector surface (412) being inclined towards the first light source (61) with respect to the height direction.

3. The lighting assembly according to claim 2, **characterized in that** the first principal axis angle (α1) is 15° - 35°, and the second principal axis angle (α2) is 30° - 50°.

4. The lighting assembly according to claim 2 or 3, **characterized in that** the second principal axis angle (α2) is at least 10° larger than the first principal axis angle (α1).

5. The lighting assembly according to any one of the preceding claims, **characterized in that** the first radius of curvature (r1) is larger than the distance of the first light source (61) from the first reflector surface (411) .

6. The lighting assembly according to any one of the preceding claims, **characterized in that** the lighting system comprises a circuit board (612), and the first light source (61) comprises several LEDs (615) installed on the circuit board (612), the circuit board (612) being located such that a plane defined by the circuit board (612) is angled at a circuit board angle (y) relative to the height direction, the circuit board angle (y) being 20° - 45°, and the principal axis (pa1) of the first reflector surface passes through the circuit board (612).

7. The lighting assembly according to any one of the preceding claims, **characterized in that** the lighting assembly comprises a fin system which is configured to reduce lateral reflection of the light output from the lighting assembly, the fin system comprising several longitudinally extending fins (81 - 86) which are each opaque and weakly reflective elements located on the path of the ray of light output from the lighting system after the reflector system.

8. The lighting assembly according to any one of the preceding claims, **characterized in that** the lighting assembly is configured to be such that substantially all of the light emitted by the lighting system out from the housing (2) passes via the reflector system.

## Patentansprüche

1. Beleuchtungsanordnung, umfassend:
ein Gehäuse (2), aufweisend eine Längsrichtung, eine Lateralrichtung und eine Höhenrichtung, die senkrecht zueinander sind;
ein Beleuchtungssystem, das in dem Gehäuse (2) angeordnet ist und eingerichtet ist, Licht zu erzeugen und das Licht aus dem Gehäuse (2) heraus zu emittieren, wobei das Beleuchtungssystem eine erste Lichtquelle (61) umfasst;
ein Reflektorsystem, das eingerichtet ist, das durch das Beleuchtungssystem erzeugte Licht aus dem Gehäuse (2) heraus zu reflektieren, und einen ersten Reflektor (41) umfasst, aufweisend:
eine erste Reflektoroberfläche (411), die eine konkave Oberfläche mit einem ersten Krümmungsradius (r1) ist, und
eine zweite Reflektoroberfläche (412), die eine konkave Oberfläche mit einem zweiten Krümmungsradius (r2) ist, der größer ist als der erste Krümmungsradius (r1), wobei ein Krümmungszentrum (cc2) der zweiten Reflektoroberfläche (412) von einem Krümmungszentrum (ccl) der ersten Reflektoroberfläche (411) beabstandet ist;
wobei die Beleuchtungsanordnung eingerichtet ist, so dass ein Großteil des von dem Beleuchtungssystem aus dem Gehäuse (2) heraus emittierten Lichts über das Reflektorsystem gelangt; und in welcher Beleuchtungsanordnung die erste Reflektoroberfläche (411) und die zweite Reflektoroberfläche (412) benachbarte Reflektoroberflächen sind, von denen die zweite Reflektoroberfläche (412) in der Lateralrichtung weiter von der ersten Lichtquelle (61) entfernt ist als die erste Reflektoroberfläche (411),
**dadurch gekennzeichnet, dass** die erste Reflektoroberfläche (411) und die zweite Reflektoroberfläche (412) des ersten Reflektors (41) in Bezug auf die erste Lichtquelle (61) so angeordnet sind, dass ein von dem Zentrum der ersten Lichtquelle (61) ausgehender Lichtstrahl reflektiert wird von einem ersten Rand der ersten Reflektoroberfläche (411) unter einem ersten Reflexionswinkel (β1) relativ zu der Höhenrichtung, von einem zweiten Rand der ersten Reflektoroberfläche (411) unter einem zweiten Reflexionswinkel (β2) relativ zu der Höhenrichtung, von dem mittleren Punkt zwischen einem ersten Rand und einem zweiten Rand der zweiten Reflektoroberfläche (412) unter einem dritten Reflexionswinkel (β31) relativ zu der Höhenrichtung, und von dem zweiten Rand der zweiten Reflektoroberfläche (412) unter einem vierten Reflexionswinkel (β4) relativ zu der Höhenrichtung, wobei jeder von dem ersten Reflexionswinkel (β1), dem zweiten Reflexionswinkel(β2), dem dritten Reflexionswinkel (β31) und dem vierten Reflexionswinkel (β4) kleiner ist als ein Reflexion-Grenzwertwinkel, der 0°-10° beträgt.

2. Beleuchtungsanordnung gemäß Anspruch 1, **dadurch gekennzeichnet, dass** eine Hauptachse (pa1) der ersten Reflektoroberfläche (411) unter einem ersten Hauptachsenwinkel (α1) relativ zu der Höhenrichtung abgewinkelt ist, und eine Hauptachse (pa2) der zweiten Reflektoroberfläche (412) unter einem zweiten Hauptachsenwinkel (a2) relativ zu der Höhenrichtung abgewinkelt ist, wobei beide, die Hauptachse (pa1) der ersten Reflektoroberfläche (411) und die Hauptachse (pa2) der zweiten Reflektoroberfläche (412), in Bezug auf die Höhenrichtung in Richtung der ersten Lichtquelle (61) geneigt sind.

3. Beleuchtungsanordnung gemäß Anspruch 2, **dadurch gekennzeichnet, dass** der erste Hauptachsenwinkel (α1) 15°-35° beträgt und der zweite Hauptachsenwinkel (α2) 30°-50° beträgt.

4. Beleuchtungsanordnung gemäß Anspruch 2 oder 3, **dadurch gekennzeichnet, dass** der zweite Hauptachsenwinkel (a2) mindestens 10° größer ist als der erste Hauptachsenwinkel (α1).

5. Beleuchtungsanordnung gemäß einem der vorangehenden Ansprüche, **dadurch gekennzeichnet, dass** der erste Krümmungsradius (r1) größer ist als der Abstand der ersten Lichtquelle (61) von der ersten Reflektoroberfläche (411).

6. Beleuchtungsanordnung gemäß einem der vorangehenden Ansprüche, **dadurch gekennzeichnet, dass** das Beleuchtungssystem eine Leiterplatte (612) umfasst und die erste Lichtquelle (61) mehrere LEDs (615) umfasst, die auf der Leiterplatte (612) angeordnet sind, wobei die Leiterplatte (612) so angeordnet ist, dass eine durch die Leiterplatte (612) definierte Ebene unter einem Leiterplattenwinkel (y) relativ zu der Höhenrichtung abgewinkelt ist, wobei der Leiterplattenwinkel (γ) 20°-45° beträgt, und die Hauptachse (pa1) der ersten Reflektoroberfläche durch die Leiterplatte (612) verläuft.

7. Beleuchtungsanordnung gemäß einem der vorangehenden Ansprüche, **dadurch gekennzeichnet, dass** die Beleuchtungsanordnung ein Lamellensystem umfasst, das eingerichtet ist, Lateralreflexion des von der Beleuchtungsanordnung abgegebenen Lichts zu verringern, wobei das Lamellensystem mehrere sich in Längsrichtung erstreckende Lamellen (81-86) umfasst, die jeweils undurchsichtige und schwach reflektierende Elemente sind, die sich auf dem Pfad des Lichtstrahls befinden, der von dem Beleuchtungssystem hinter dem Reflektorsystem abgegeben wird.

8. Beleuchtungsanordnung gemäß einem der vorangehenden Ansprüche, wobei die Beleuchtungsanordnung so eingerichtet ist, dass im Wesentlichen das gesamte von dem Beleuchtungssystem aus dem Gehäuse (2) heraus emittierte Licht über das Reflektorsystem gelangt.

## Revendications

1. Ensemble d'éclairage, comprenant :
un boîtier (2) ayant une direction longitudinale, une direction latérale et une direction de hauteur qui sont perpendiculaires les unes aux autres ;
un système d'éclairage qui est installé dans le boîtier (2) et configuré pour produire de la lumière et émettre la lumière hors du boîtier (2), le système d'éclairage comprenant une première source de lumière (61) ;
un système de réflecteur qui est configuré pour réfléchir la lumière produite par le système d'éclairage hors du boîtier (2) et comprend un premier réflecteur (41) comprenant
une première surface de réflecteur (411) qui est une surface concave avec un premier rayon de courbure (r1), et
- une deuxième surface de réflecteur (412) qui est une surface concave avec un deuxième rayon de courbure (r2) qui est plus grand que le premier rayon de courbure (r1), un centre de courbure (cc2) de la deuxième surface de réflecteur (412) étant espacé d'un centre de courbure (cc1) de la première surface de réflecteur (411) ;
lequel ensemble d'éclairage est configuré pour être tel que la majeure partie de la lumière émise par le système d'éclairage hors du boîtier (2) passe par le système de réflecteur ; et dans lequel ensemble d'éclairage la première surface de réflecteur (411) et la deuxième surface de réflecteur (412) sont des surfaces de réflecteur adjacentes, dont la deuxième surface de réflecteur (412) est située dans la direction latérale plus loin de la première source de lumière (61) que la première surface de réflecteur (411),
**caractérisé en ce que** la première surface de réflecteur (411) et la deuxième surface de réflecteur (412) du premier réflecteur (41) sont situées, par rapport à la première source de lumière (61), de telle sorte qu'un rayon de sortie de lumière depuis le centre de la première source de lumière (61) est réfléchi depuis un premier bord de la première surface de réflecteur (411) à un premier angle de réflexion (β1) par rapport à la direction de hauteur, depuis un deuxième bord de la première surface de réflecteur (411) à un deuxième angle de réflexion (β2) par rapport à la direction de hauteur, à partir du point central entre un premier bord et un deuxième bord de la deuxième surface de réflecteur (412) à un troisième angle de réflexion (β31) par rapport à la direction de hauteur, et à partir du deuxième bord de la deuxième surface de réflecteur (412) à un quatrième angle de réflexion (β4) par rapport à la direction de hauteur, moyennant quoi chacun du premier angle de réflexion (β1), du deuxième angle de réflexion (β2), du troisième angle de réflexion (β31) et du quatrième angle de réflexion (β4) est inférieur à un angle de seuil de réflexion qui est de 0° à 10°.

2. Ensemble d'éclairage selon la revendication 1, **caractérisé en ce qu'**un axe principal (pa1) de la première surface de réflecteur (411) est incliné selon un premier angle d'axe principal (α1) par rapport à la direction de hauteur, et un axe principal (pa2) de la deuxième surface de réflecteur (412) est incliné selon un deuxième angle d'axe principal (a2) par rapport à la direction de hauteur, l'axe principal (pa1) de la première surface de réflecteur (411) et l'axe principal (pa2) de la deuxième surface de réflecteur (412) étant tous deux inclinés vers la première source de lumière (61) par rapport à la direction de hauteur.

3. Ensemble d'éclairage selon la revendication 2, **caractérisé en ce que** le premier angle d'axe principal (α1) est de 15° à 35°, et le deuxième angle d'axe principal (a2) est de 30° à 50°.

4. Ensemble d'éclairage selon la revendication 2 ou 3, **caractérisé en ce que** le deuxième angle d'axe principal (a2) est au moins 10° plus grand que le premier angle d'axe principal (α1).

5. Ensemble d'éclairage selon l'une quelconque des revendications précédentes, **caractérisé en ce que** le premier rayon de courbure (r1) est supérieur à la distance de la première source de lumière (61) par rapport à la première surface de réflecteur (411).

6. Ensemble d'éclairage selon l'une quelconque des revendications précédentes, **caractérisé en ce que** le système d'éclairage comprend une carte de circuit imprimé (612), et la première source de lumière (61) comprend plusieurs diodes électroluminescentes (615) installées sur la carte de circuit imprimé (612), la carte de circuit imprimé (612) étant située de telle sorte qu'un plan défini par la carte de circuit imprimé (612) est incliné selon un angle de carte de circuit imprimé (y) par rapport à la direction de hauteur, l'angle de carte de circuit imprimé (y) étant compris entre 20° et 45°, et l'axe principal (pa1) de la première surface de réflecteur passe par la carte de circuit imprimé (612).

7. Ensemble d'éclairage selon l'une quelconque des revendications précédentes, **caractérisé en ce que** l'ensemble d'éclairage comprend un système d'ailettes qui est configuré pour réduire la réflexion latérale de la sortie de lumière de l'ensemble d'éclairage, le système d'ailettes comprenant plusieurs ailettes s'étendant longitudinalement (81 - 86) qui sont chacune des éléments opaques et faiblement réfléchissants situés sur le trajet du rayon de sortie de lumière du système d'éclairage après le système de réflecteur.

8. Ensemble d'éclairage selon l'une quelconque des revendications précédentes, **caractérisé en ce que** l'ensemble d'éclairage est configuré pour être tel que sensiblement toute la lumière émise par le système d'éclairage hors du boîtier (2) passe par le système de réflecteur.
